# EUROPÄISCHE PATENTSCHRIFT

(11) **EP 3 040 560 B1**
(45) Veröffentlichungstag und Bekanntmachung des Hinweises auf die Patenterteilung: **25.04.2018**
(21) Anmeldenummer: 15197335.1
(22) Anmeldetag: 01.12.2015
(51) Int. Cl.: F04D 19/02, F01D 11/12, F01D 25/24, F04D 19/04, F04D 29/02, F04D 29/52, F04D 29/54

(54) **GEHÄUSEVORRICHTUNG FÜR EINE VERDICHTERSTUFE EINER MEHRSTUFIG AUSGEFÜHRTEN VERDICHTERVORRICHTUNG UND VERFAHREN ZUR HERSTELLUNG EINER GEHÄUSEVORRICHTUNG**
HOUSING DEVICE FOR A STAGE OF A MULTI-STAGE COMPRESSOR AND A METHOD FOR PRODUCING A HOUSING DEVICE
DISPOSITIF DE BOITIER POUR UN ETAGE D'UN COMPRESSEUR A PLUSIEURS ETAGES ET PROCEDE DE FABRICATION D'UN DISPOSITIF DE BOITIER

(30) Priorität: 29.12.2014 DE 102014119673
(43) Veröffentlichungstag der Anmeldung: 06.07.2016
(73) Patentinhaber: Rolls-Royce Deutschland Ltd & Co KG, 15827 Blankenfelde-Mahlow (DE)
(72) Erfinder: Rautenstrauch, Marco, 12435 Berlin (DE)
(74) Vertreter: Schmidt, Martin Michael

(56) Entgegenhaltungen:
- US-A- 2 763 462
- US-A- 2 994 508
- US-A- 3 319 930
- US-A1- 2011 008 165
- US-A1- 2013 177 400

## Beschreibung

Die Erfindung betrifft eine Gehäusevorrichtung für eine Verdichterstufe einer mehrstufig ausgeführten Verdichtervorrichtung eines Flugtriebwerks gemäß der im Oberbegriff der Patentansprüche 1 bis 3 näher definierten Art und ein Verfahren zur Herstellung einer derartigen Gehäusevorrichtung gemäß der im Oberbegriff des Patentanspruches 9 näher definierten Art.

Aus der Praxis sind Flugtriebwerke bekannt, die mit mehrstufig aufgebauten Verdichtervorrichtungen ausgebildet sind. Eine derartige Verdichtervorrichtung weist ein Rotorschaufeln von Rotoreinrichtungen und Leitschaufeln von Statoreinrichtungen lagerndes Verdichtergehäuse auf. Das in einem äußeren Umfangsbereich an Rotorschaufeln grenzende Verdichtergehäuse ist in axialer Richtung der Verdichtervorrichtung mit mehreren aneinander grenzenden Gehäuseeinrichtungen ausgebildet, wobei jeweils eine Gehäuseeinrichtung einer Verdichterstufe zugeordnet ist.

Die Gehäuseeinrichtungen der Verdichtervorrichtung sind im Wesentlichen baugleich zueinander ausgeführt und weisen jeweils einen Flanschbereich auf, über den in axialer Richtung der Verdichtervorrichtung aneinander grenzende Gehäuseeinrichtungen miteinander verbunden sind. Weiterhin sind die Gehäuseeinrichtungen mit einem mit einer Einlaufschicht versehenen Rotorbereich ausgeführt, der in einem radial inneren Durchmesserbereich der Gehäuseeinrichtung angeordnet ist und im Betrieb des Flugtriebwerks mit den Rotorschaufeln einer Rotorvorrichtung zusammenwirkt. Zudem weisen die Gehäuseeinrichtungen wenigstens einen C-förmig ausgeführten Aufnahmebereich für Leitschaufeln einer Statoreinrichtung auf, in die die Leitschaufeln bei der Montage der Verdichtervorrichtung in axialer Richtung eingeschoben werden und von denen die Leitschaufeln bei montierter Verdichtervorrichtung in axialer und radialer Richtung der Verdichtervorrichtung gehalten sind.

Derartige mit einem Flanschbereich, einem Rotorbereich und einem oder zwei Aufnahmebereichen ausgebildete Gehäuseeinrichtungen bekannter Verdichtervorrichtungen werden aus einem Grundkörper aus Vollmaterial hergestellt, wobei der Grundkörper über ein Schmiedeverfahren bereitgestellt wird und ein vorgegebenes Aufmaß gegenüber den Endabmessungen der herzustellenden Gehäuseeinrichtung aufweist. Die gewünschte Form der jeweiligen Gehäuseeinrichtung wird aus diesem Grundkörper über spanende Bearbeitungsverfahren hergestellt.

Die Herstellung derartiger hinsichtlich der Formgebung komplex ausgeführter Gehäuseeinrichtungen ist nachteilhafterweise aufwändig und verursacht hohe Fertigungskosten. Durch die spanende Herstellung der Gehäuseeinrichtungen sind zudem Materialkosten nachteilhafterweise hoch.

Ein Gasturbinentriebwerk mit einer Statorvorrichtung ist in der Druckschrift US 2013/177400 A1 beschrieben, wobei die Statorvorrichtung ein äußeres Gehäuse aufweist, das mehrere Statoren unterstützt. Es sind weiterhin mehrere Dichtelemente vorgesehen, die mittels Befestigungselementen in einem Flanschbereich an dem äußeren Gehäuse befestigt sind. Die Dichtelemente weisen weiterhin einen Aufnahmebereich zur Anbindung eines Stators und einen zum Zusammenwirken mit einem Rotor vorgesehenen Bereich auf.

Ein Gasturbinentriebwerk mit einem Triebwerksgehäuse ist in der Druckschrift US 2011/008165 A1 beschrieben. Das Triebwerksgehäuse weist ein Ringgehäuse auf, das von einem ersten Körper und einem zweiten Körper gebildet ist. Der erste Körper umfasst eine Vielzahl von Leitschaufeln, wohingegen der zweite Körper einen zum Zusammenwirken mit Rotorschaufeln ausgeführten Bereich aufweist. Der erste Körper und der zweite Körper sind über eine Verbindungseinrichtung mit Stiften miteinander verbunden. Die Körper weisen jeweils einen Flansch auf, über die die Körper an Gehäuseteile angebunden sind. Die Gehäuseteile sind wiederum über Flansche miteinander verbunden.

Aus der US 3,319,930 A ist ein Verdichterstatorgehäuse bekannt, das in blechbauweise ausgeführt ist. Dabei sind mit Rotorschaufeln zusammenwirkende Deckbänder offenbart, die über einen Montageflansch an einen äußeren Statorring angebunden sind. Der Statorring ist mit zwei Seitenteilen, einem Bodenteil, Flanschen und Ringen ausgeführt.

Aus der US 2,994,508 A ist eine Kompressorvorrichtung mit einer Kompressorrotoreinrichtung bekannt, die innerhalb einer Statorschaufeleinrichtung angeordnet ist. Ein mit Rotorschaufeln zusammenwirkendes Deckband ist von Nutverbindungen unterstützt, die wiederum mit ringförmigen Deckbandsegmenten der Leitschaufeln zusammenwirken, wobei die Deckbandsegmente über Bolzen an eine blechförmige Hülle angebunden sind.

Der vorliegenden Erfindung liegt die Aufgabe zugrunde, eine Gehäusevorrichtung zur Verfügung zu stellen, die auf einfache und kostengünstige Weise herstellbar ist. Weiterhin ist es Aufgabe der vorliegenden Erfindung, ein einfaches und kostengünstiges Verfahren zur Herstellung einer derartigen Gehäusevorrichtung zur Verfügung zu stellen.

Erfindungsgemäß wird diese Aufgabe mit einer Gehäusevorrichtung mit den Merkmalen der Patentansprüche 1 bis 3 und mit einem Verfahren zur Herstellung einer derartigen Gehäusevorrichtung mit den Merkmalen des Patentanspruches 9 gelöst.

Es wird eine Gehäusevorrichtung für eine Verdichterstufe einer mehrstufig ausgeführten Verdichtervorrichtung eines Flugtriebwerks vorgeschlagen, die mit einem Flanschbereich zur Anbindung an wenigstens eine in axialer Richtung benachbarte Gehäusevorrichtung einer weiteren Verdichterstufe, mit einem Rotorbereich, der im Einsatz der Gehäusevorrichtung in radialer Richtung der Verdichtervorrichtung direkt mit Rotorschaufeln einer Rotorvorrichtung zusammenwirkt, und mit wenigstens einem Aufnahmebereich ausgeführt ist, der zum Aufnehmen von Leitschaufeln einer Statorvorrichtung vorgesehen ist.

Gemäß der Ausführung nach Patentanspruch 1 wird vorgeschlagen, dass mehrere Teile der Gehäusevorrichtung aus Blechteilen hergestellt sind, wobei ein erster Blechteil der Gehäusevorrichtung den Flanschbereich und ein zweiter Blechteil der Gehäusevorrichtung den Rotorbereich umfasst und der erste Blechteil und der zweite Blechteil gemeinsam den wenigstens einen Aufnahmebereich bilden.

Eine derartig ausgeführte Gehäusevorrichtung ist sowohl hinsichtlich der Teilezahl als auch hinsichtlich der Herstellkosten optimiert und ist vorteilhafterweise über weniges Verbindungsschritte, insbesondere stoffschlüssige Verbindungsprozesse, herstellbar.

Gemäß der Ausführung nach Patentanspruch 2 wird vorgeschlagen, dass mehrere Teile der Gehäusevorrichtung aus Blechteilen hergestellt sind, wobei ein erster Blechteil der Gehäusevorrichtung den Flanschbereich, ein zweiter Blechteil der Gehäusevorrichtung den Rotorbereich und wenigstens ein dritter Blechteil der Gehäusevorrichtung den Aufnahmebereich umfasst.

Eine derartige Ausführung der Gehäusevorrichtung bietet vorteilhafterweise die Möglichkeit, die Teile auf einfache Weise mit an die jeweiligen Anforderungen angepassten und gegebenenfalls mit voneinander abweichenden Wandstärken auszulegen.

Gemäß der Ausführung nach Patentanspruch 3 wird vorgeschlagen, dass mehrere Teile der Gehäusevorrichtung aus Blechteilen hergestellt sind, wobei ein erster Blechteil der Gehäusevorrichtung den Flanschbereich und den Rotorbereich umfasst und wenigstens ein zweiter Blechteil der Gehäusevorrichtung vorgesehen ist, der wenigstens einen Aufnahmebereich darstellt.

Der den Aufnahmebereich zum Aufnehmen von Leitschaufeln einer Statorvorrichtung bildende Teil ist vorzugsweise im Querschnitt C-förmig ausgeführt.

Alle erfindungsgemäßen Gehäusevorrichtungen gemäß der Patentansprüche 1 bis 3 sind auf einfache und kostengünstige Weise mit geringen Materialkosten herstellbar, da gegenüber aus Vollmaterial gefertigten Gehäusevorrichtungen auf kostenintensive spanende Fertigungsverfahren verzichtet werden kann bzw. der Anteil dieser Fertigungsverfahren an der Herstellung der Gehäusevorrichtung stark reduziert werden kann, wobei mit der Ausführung wenigstens eines Teils der Gehäusevorrichtung als Blechteil strukturelle Anforderungen der Gehäusevorrichtung auf einfache Weise erfüllt werden können. Durch das Vorsehen des Blechteils gegenüber einer aus Vollmaterial spanend gefertigten Gehäusevorrichtung ist zudem ein Gewicht der Gehäusevorrichtung vorteilhafterweise reduzierbar, da die erfindungsgemäße Gehäusevorrichtung mit geringeren Wandstärken als herkömmliche spanend hergestellte Gehäusevorrichtungen fertigbar sind. Mit spanenden Verfahren ist dagegen die Herstellung einer Gehäusevorrichtung mit einer geringen Wandstärke aufwendig bzw. nur bis zu einer definierten, gegebenenfalls unerwünscht großen Minimalwandstärke möglich.

Als Blechteil wird hierbei ein flaches Walzwerkfertigprodukt aus Metall bezeichnet, das insbesondere eine konstante Wandstärke aufweist.

Die erfindungsgemäße Gehäusevorrichtung ist vorzugsweise zum Zusammenwirken mit genau einer Rotorschaufeln aufweisenden Rotorvorrichtung und einer oder zwei Leitschaufeln aufweisenden Statorvorrichtung ausgeführt.

Bei der erfindungsgemäßen Gehäusevorrichtung ist die Gehäusevorrichtung mit wenigstens zwei Teilen ausgeführt. Hierdurch können die einzelnen Teile der Gehäusevorrichtung gegenüber den bekannten, einteilig ausgeführten Gehäusevorrichtungen hinsichtlich der jeweiligen Formgebung deutlich vereinfacht ausgebildet werden, wobei die erfindungsgemäße Gehäusevorrichtung auf vorteilhaft einfache und kostengünstige Weise herstellbar ist.

Wenn mehrere Teile der Gehäusevorrichtung aus Blechteilen mit voneinander abweichenden Wandstärken hergestellt sind, kann die Gehäusevorrichtung auf besonders einfache Weise an die im Betrieb auftretenden Lasten angepasst werden und beispielsweise durch entsprechende Wahl der Wandstärken eine Ausdehnung der Gehäusevorrichtung im Betrieb an die Ausdehnung der Rotorschaufeln der Rotorvorrichtung angepasst werden. Hierbei kann es insbesondere vorgesehen sein, dass ein den Flanschbereich umfassender Teil der Gehäusevorrichtung eine gegenüber anderen Bereichen der Gehäusevorrichtung vergrößerte Wandstärke aufweist, so dass eine thermische Ausdehnung der Gehäusevorrichtung im Betrieb auf ein Niveau reduziert ist, das im Wesentlichen demjenigen der entsprechenden Rotorvorrichtung entspricht.

Bei einer besonders vorteilhaften Ausführung der Gehäusevorrichtung ist wenigstens ein Teil der Gehäusevorrichtung mittels eines Umformverfahrens hergestellt. Insbesondere aus einem Blechteil bestehende Teile können hierbei kostengünstig und einfach gefertigt werden, wobei vorzugsweise ein Großteil der Verfahrensschritte bei der Herstellung des jeweiligen Teils mit Umformverfahren, vorzugsweise endabmessungsgenauen Umformverfahren, durchgeführt ist.

Es liegt eine im Flanschbereich besonders stabil ausgeführte Gehäusevorrichtung vor, wenn der den Flanschbereich bildende Teil der Gehäusevorrichtung im Bereich einer Anbindungsstelle für benachbarte Gehäusevorrichtungen mit einer Umbiegung ausgebildet ist. Hierdurch weist der insbesondere aus einem Blechteil gefertigte Flanschbereich eine gegenüber weiteren Bereichen des Teils wenigstens annähernd verdoppelte Wandstärke auf. Damit ist auch das thermische Ausdehnungsverhalten der Gehäusevorrichtung in einem Betrieb des Flugtriebwerks mit geringem Aufwand an das Ausdehnungsverhalten von Rotorschaufeln der Rotorvorrichtung anpassbar.

Bei einer vorteilhaften Ausführung der erfindungsgemäßen Gehäusevorrichtung sind die Teile der Gehäusevorrichtung stoffschlüssig miteinander verbunden. Vorzugsweise sind die Teile miteinander verschweißt oder verlötet, wobei Versuche ergeben haben, dass eine sehr geringe Anzahl an Schweiß- bzw. Lötstellen lediglich geringe Verformungen zur Folge hat, wobei der Entstehung von Verformungen während des Herstellverfahrens gegebenenfalls mittels entsprechenden Werkzeugen entgegengewirkt werden kann.

Der den Rotorbereich umfassende Teil der Gehäusevorrichtung ist bei einer vorteilhaften Ausführung der erfindungsgemäßen Gehäusevorrichtung auf einer im Einsatz der Gehäusevorrichtung Rotorschaufeln einer Rotorvorrichtung zugewandten Seite mit einer abrasiven Schicht bzw. Einlaufschicht, beispielsweise einer Keramikschicht, ausgeführt, die vorzugsweise auf den den Rotorbereich umfassenden Teil der Gehäusevorrichtung aufgetragen ist. Weisen Rotorschaufeln in radialer Richtung eine größere Ausdehnung als die Gehäusevorrichtung auf, kommen die Rotorschaufeln mit ihren äußeren Bereichen mit der abrasiven Einlaufschicht in Kontakt. Damit ist ein direkter Kontakt zwischen den Rotorschaufeln und dem den Rotorbereich umfassenden Teil der Gehäusevorrichtung bei unterschiedlichem radialen Ausdehnungsverhalten des Teils der Gehäusevorrichtung und der Rotorschaufeln vermieden, der ansonsten einen Materialabtrag im Bereich des Teils der Gehäusevorrichtung zur Folge hätte und damit zu unerwünschten Bauteilschäden an Rotor und Gehäusen führen kann.

Die Gehäusevorrichtung kann eine Positioniereinrichtung, beispielsweise einen Positionierstift oder -zapfen bzw. so genannte Passungsdurchmesser, aufweisen, um bei der Montage von mehreren benachbarten Gehäusevorrichtungen diese in radialer Richtung auf einfache Weise zueinander ausrichten zu können.

Es wird weiterhin ein Verfahren zur Herstellung einer oben näher beschriebenen Gehäusevorrichtung vorgeschlagen, wobei erfindungsgemäß vorgesehen ist, dass wenigstens ein Teil der Gehäusevorrichtung mittels eines Umformverfahrens hergestellt wird.

Durch das erfindungsgemäße Verfahren ist die Gehäusevorrichtung gegenüber einer aus Vollmaterial hergestellten Gehäusevorrichtung auf einfache und kostengünstige Weise mit geringem Eigengewicht und an den jeweils vorliegenden Lastfall angepasst herstellbar, da der jeweilige Teil der Gehäusevorrichtung durch das Umformverfahren in wenigen Verfahrensschritten fertigbar ist. Eine mit dem erfindungsgemäßen Verfahren hergestellte Gehäusevorrichtung erfordert vorteilhafterweise keine oder lediglich in geringem Umfang spanabtragende Verfahren zur Herstellung einer gewünschten Endkontur.

Bei einer vorteilhaften Ausführung des erfindungsgemäßen Verfahrens wird der wenigstens eine Teil der Gehäusevorrichtung mittels eines endabmessungsnahen Umformverfahrens, eines so genannten nearnetshape-Umformverfahrens, hergestellt. Die Fertigung des jeweiligen Teils der Gehäusevorrichtung ist hierbei besonders kostengünstig und einfach durchführbar, da der jeweilige Teil in einer besonders geringen Anzahl von Verfahrensschritten herstellbar ist. Dabei sind u. a. Schubumformverfahren, Hydroumformverfahren und/oder Rollformverfahren denkbar.

Wenigstens ein Teil der Gehäusevorrichtung wird vorzugsweise aus einem Blechteil bzw. einem ebenen Grundkörper gefertigt, wobei zunächst der Querschnitt bzw. das Profil des Teils hergestellt wird und anschließend das entstandene Zwischenprodukt in eine Ringform überführt wird, wobei dessen Endbereiche anschließend vorzugsweise stoffschlüssig miteinander verbunden werden.

Bei einer hierzu alternativ ausgeführten Gehäusevorrichtung ist es vorgesehen, dass die Endbereiche des Rings nicht direkt miteinander verbunden werden und ein Spalt zwischen den Endbereichen des Rings vorliegt. Hierdurch wird ein offener Ring gebildet. Die insbesondere stoffschlüssige Verbindung von zwei offenen Ringen miteinander ist einfacher durchzuführen als die Verbindung von zwei geschlossenen Ringen, bei denen die Endbereiche miteinander verbunden sind, da die geschlossenen Ringe aufwändig und sehr genau gefertigt werden müssen, um einen gewünschten radialen Spalt einzustellen. Sowohl der Querschnitt des Teils als auch die Ringform werden vorteilhafterweise mittels eines Umformverfahrens hergestellt.

Bei einer vorteilhaften Ausführung des erfindungsgemäßen Verfahrens werden zunächst die einzelnen Teile der Gehäusevorrichtung gefertigt und anschließend insbesondere stoffschlüssig miteinander verbunden. Zur Verbindung der einzelnen Teile der Gehäusevorrichtung sind stoffschlüssige Verfahrensschritte, d. h. vorzugsweise Schweiß- bzw. Lötschritte, nötig, welche mit Hilfe von Spann- und/oder Klemmvorrichtungen durchgeführt werden können, um unerwünschte Verformungen, die gegebenenfalls aufwändige Nachbearbeitungsprozesse erforderlich machen, zu vermeiden bzw. zu begrenzen.

Um beispielsweise auch im Bereich von Verbindungsstellen von in montiertem Zustand aneinander angrenzenden Teilen der Gehäusevorrichtung eine den restlichen Bereichen der Teile im Wesentlichen entsprechende Wandstärke erzielen zu können, ist es bei einer Weiterbildung des erfindungsgemäßen Verfahrens vorgesehen, dass wenigstens ein Bereich eines Teils der Gehäusevorrichtung beispielsweise durch Schleifen oder andere hierfür geeignete Bearbeitungsverfahren zumindest bereichsweise im Verbindungsbereich angepasst wird.

Sowohl die in den Patentansprüchen angegebenen Merkmale als auch die in den nachfolgenden Ausführungsbeispielen der erfindungsgemäßen Gehäusevorrichtung und dem erfindungsgemäßen Verfahren zur Herstellung einer Gehäusevorrichtung angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen der erfindungsgemäßen Gehäusevorrichtung und einem Verfahren zur Herstellung einer Gehäusevorrichtung ergeben sich aus den Patentansprüchen und den nachfolgend unter Bezugnahme auf die Zeichnung prinzipmäßig beschriebenen Ausführungsbeispielen, wobei zugunsten der Übersichtlichkeit jeweils für bau- und funktionsgleiche Bauteile dieselben Bezugszeichen verwendet werden.

Es zeigt:
- Fig. 1: eine schematisierte Längsschnittansicht eines Flugtriebwerks mit einer mehrere Verdichterstufen aufweisenden Verdichtervorrichtung;
- Fig. 2: eine vereinfachte Teilschnittdarstellung des Flugtriebwerks der Fig. 1, wobei Verdichterstufen der Verdichtervorrichtung ersichtlich sind;
- Fig. 3: eine vereinfachte Schnittdarstellung einer ersten Ausführungsform der erfindungsgemäßen Gehäusevorrichtung des Flugtriebwerks gemäß Fig. 1;
- Fig. 4: eine Fig. 3 entsprechende Darstellung einer zweiten Ausführungsform der erfindungsgemäßen Gehäusevorrichtung; und
- Fig. 5: eine vereinfachte dreidimensionale Darstellung einer dritten Ausführungsform der erfindungsgemäßen Gehäusevorrichtung.

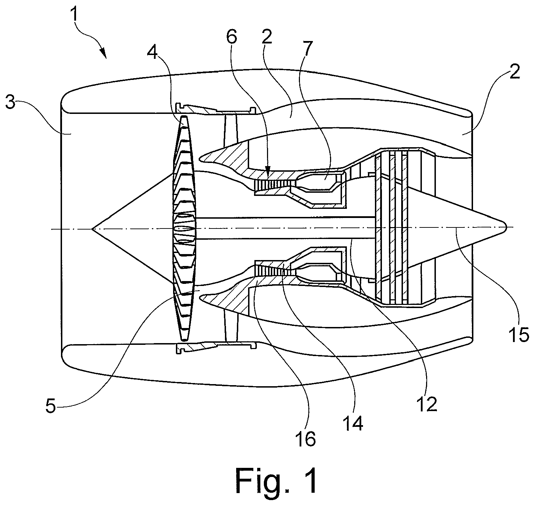

In Fig. 1 ist ein Flugtriebwerk bzw. Strahltriebwerk 1 in einer Längsschnittansicht gezeigt. Das Flugtriebwerk 1 ist mit einem Nebenstromkanal 2 und einem Einlaufbereich 3 ausgebildet, wobei sich an den Einlaufbereich 3 stromab ein Bläser 4 in an sich bekannter Art und Weise anschließt. Wiederum stromab des Bläsers 4 teilt sich der Massenstrom im Flugtriebwerk 1 in einen Nebenstrom und einen Kernstrom auf, wobei der Nebenstrom durch den Nebenstromkanal 2 und der Kernstrom in einen Triebwerkskern 5 bzw. Kernstromkanal strömt, der wiederum in an sich bekannter Art und Weise mit einer Verdichtervorrichtung 6, einem Brenner 7 und einer Turbineneinrichtung 8 ausgeführt ist.

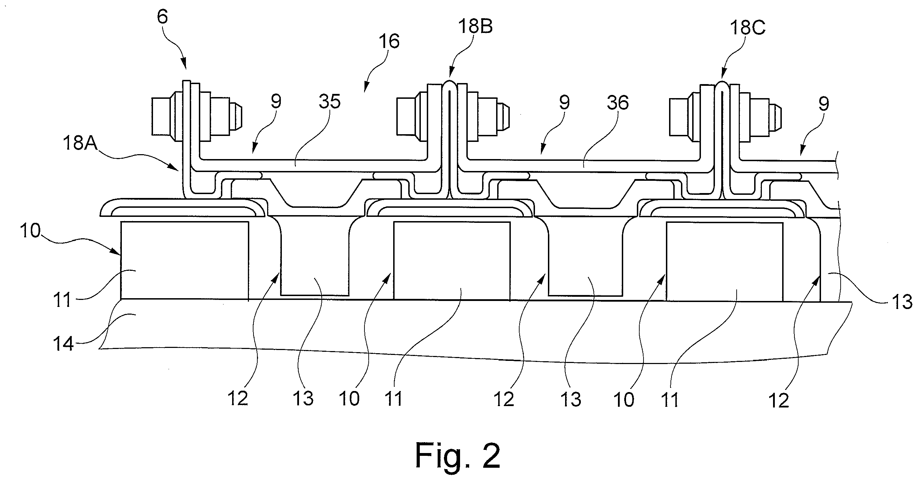

Ein Ausschnitt einer aus der Praxis bekannten und mit mehreren Verdichterstufen 9 ausgeführten Verdichtervorrichtung 6 ist in Fig. 2 gezeigt, wobei in Fig. 2 drei Verdichterstufen 9 ersichtlich sind. Jeder Verdichterstufe 9 ist jeweils eine Rotorvorrichtung 10 mit umfangsseitig angeordneten Rotorschaufeln 11 und eine Statorvorrichtung 12 mit umfangsseitig angeordneten Leitschaufeln 13 zugeordnet. Die Rotorvorrichtungen 10 sind mit einem radial inneren Gehäuse 14 wirkverbunden, mit welchem die Rotorvorrichtungen 10 im Betrieb des Flugtriebwerks 1 um eine Zentralachse 15 des Flugtriebwerks rotieren.

Die Statorvorrichtungen 12 sind dagegen an einem das innere Gehäuse 14 in radialer Richtung umfassenden äußeren Gehäuse 16 angeordnet, das den Nebenstromkanal 2 von dem Triebwerkskern 5 trennt. Die Leitschaufeln 13 der Statorvorrichtungen 12 und das äußere Gehäuse 16 sind dabei drehfest an dem Triebwerk 1 angeordnet. Das innere Gehäuse 14 und das äußere Gehäuse 16 begrenzen den Triebwerkskern 5 in radialer Richtung, wobei das innere Gehäuse 14 eine innere Begrenzung eines den Triebwerkskern 5 durchströmenden Luftvolumenstroms und das äußere Gehäuse 16 eine äußere Begrenzung des den Triebwerkskern 5 durchströmenden Luftvolumenstroms bildet.

Das Gehäuse 16 weist mehrere in axialer Richtung miteinander wirkverbundene Gehäusevorrichtungen 18A bis 18C auf, von denen jede Gehäusevorrichtung 18A bis 18C einer Verdichterstufe 9 zugeordnet ist. Die Gehäusevorrichtungen 18A bis 18C sind prinzipiell ähnlich ausgeführt, wobei die Gehäusevorrichtungen 18A mit einer Statorvorrichtung 12 und die Gehäusevorrichtungen 18B und 18C jeweils mit zwei in axialer Richtung des Flugtriebwerks 1 benachbarten Statorvorrichtungen 12 zusammenwirken.

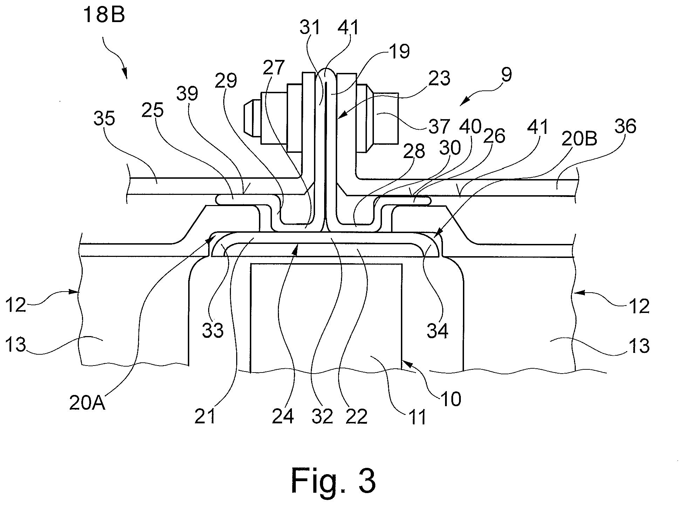

In Fig. 3 ist die Gehäusevorrichtung 18B vergrößert gezeigt, die im Folgenden stellvertretend für die weiteren Gehäusevorrichtungen 18A und 18C betrachtet wird, da der Aufbau der Gehäusevorrichtungen 18A und 18C im Wesentlichen entsprechend ist.

Die Gehäusevorrichtung 18A weist im Unterschied zu der Gehäusevorrichtung 18B lediglich einen im Folgenden näher beschriebenen Aufnahmebereich 20A bzw. 20B für die Leitschaufeln 13 auf.

Die Gehäusevorrichtung 18B weist einen Flanschbereich 19 auf, über den zwei in axialer Richtung des Flugtriebwerks 1 benachbart zueinander angeordnete Gehäusevorrichtungen 18 miteinander verbunden sind. Die Gehäusevorrichtung 18B weist zudem einen Rotorbereich 21 auf, der Rotorschaufeln 11 der Rotorvorrichtung 10 zugewandt ist und der auf einer den Rotorschaufeln 11 zugewandten Seite mit einer abrasiven Einlaufschicht 22, beispielsweise einer Keramikschicht, ausgeführt ist.

Weiterhin weist die Gehäusevorrichtung 18B zwei Aufnahmebereiche 20A, 20B auf, in die jeweils Leitschaufeln 13 der Statorvorrichtungen 12 in axialer Richtung des Flugtriebwerks 1 eingeschoben bzw. eingehangen sind. Zwei in axialer Richtung des Flugtriebwerks 1 benachbarte Gehäusevorrichtungen 18 fixieren somit Leitschaufeln 13 einer Statorvorrichtung 12 in axialer Richtung.

Die Gehäusevorrichtung 18B weist bei der Ausführung gemäß Fig. 3 zwei Teile 23, 24 auf, wobei ein erster Teil 23 den Flanschbereich 19 umfasst. Der erste Teil 23 ist im Querschnitt im Wesentlichen T-förmig ausgeführt, wobei Seitenschenkel 25, 26 gegenüber mit dem zweiten Teil 24 zusammenwirkenden Zentralschenkeln 27, 28 eine Stufe 29, 30 ausbilden und gegenüber dem zweiten Teil 24 in radialer Richtung des Flugtriebwerks 1 beabstandet sind. Sowohl der erste Teil 23 als auch der zweite Teil 24 sind jeweils aus einem einzigen eine konstante Wandstärke aufweisenden Blechteil durch Umformverfahren hergestellt. Das Blechteil des ersten Teils 23 wird zur Erzeugung einer Umbiegung 41 um etwa 180° umgebogen, so dass ein sich im Wesentlichen in radialer Richtung des Flugtriebwerks 1 erstreckender und den Flanschbereich 19 aufweisender Mittelschenkel 31 eine gegenüber den anderen Schenkeln 25 bis 28 im Wesentlichen doppelte Wandstärke aufweist.

Der zweite Teil 24 der Gehäusevorrichtung 18B ist mit einem im Wesentlichen in radialer Richtung des Flugtriebwerks 1 verlaufenden Zentralbereich 32 ausgeführt, dessen Endbereiche 33, 34 in radialer Richtung des Flugtriebwerks 1 nach innen gebogen sind. Um eine axiale Länge des zweiten Teils 24 exakt einstellen zu können, können die Endbereiche 33, 34 nach der Herstellung des zweiten Teils 24 durch Umformverfahren gegebenenfalls nachbearbeitet werden.

Bei der in Fig. 3 gezeigten Ausführung der Gehäusevorrichtung 18B werden die Aufnahmebereiche 20A bzw. 20B jeweils durch den Zentralbereich 32 des zweiten Teils 24 und den Seitenschenkel 25 bzw. 26 und die Stufe 29 bzw. 30 des ersten Teils 23 der Gehäusevorrichtung 18B gebildet, wobei die Aufnahmebereiche 20A, 20B einen im Wesentlichen C-förmigen Querschnitt aufweisen. Die Teile 23 und 24 der Gehäusevorrichtung 18B sind hier im Wesentlichen symmetrisch zu dem Flanschbereich 19 ausgeführt.

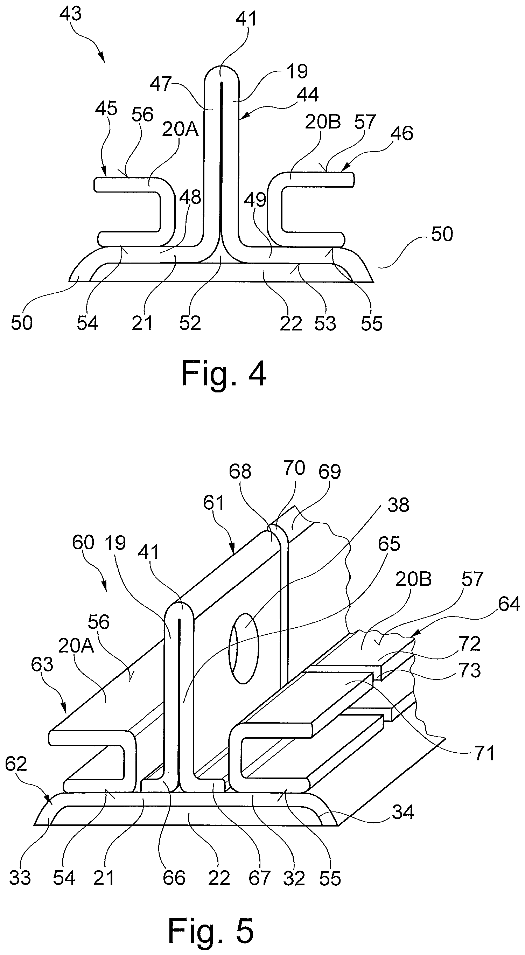

Zur Verbindung von zwei in axialer Richtung des Flugtriebwerks 1 benachbart zueinander angeordneten Gehäusevorrichtungen 18 sind hier im Querschnitt U-förmig ausgeführte Gehäuseteile 35, 36 vorgesehen, von denen ein Gehäuseteil 35 zur Anbindung der Gehäusevorrichtung 18B an die Gehäusevorrichtung 18A und ein Gehäuseteil 36 zur Anbindung der Gehäusevorrichtung 18B an die Gehäusevorrichtung 18C vorgesehen ist. Die Gehäuseteile 35, 36 sind dabei über eine Schraubverbindung 37 jeweils im Flanschbereich 19 an dem ersten Teil 23 der Gehäusevorrichtung 18B angeordnet, wobei der erste Teil 23 der Gehäusevorrichtung 18B hierzu im Flanschbereich 19 eine in der Fig. 5 näher ersichtliche Bohrung 38 aufweist. Umfangsseitig verteilt sind mehrere derartige Bohrungen 38 vorgesehen. Die Gehäuseteile 35 bzw. 36 liegen in montiertem Zustand an einer äußeren Oberfläche 39 bzw. 40 der Seitenschenkel 25 bzw. 26 an und sind mit diesen insbesondere stoffschlüssig verbunden.

In Fig. 4 ist eine zweite Ausführungsform einer erfindungsgemäßen Gehäusevorrichtung 43 gezeigt, die in vergleichbarer Weise wie die Gehäusevorrichtung 18B gemäß Fig. 3 einer Verdichterstufe 9 der Verdichtervorrichtung 6 des Flugtriebwerks 1 gemäß Fig. 1 zugeordnet ist und der ausgenommen der im Folgenden beschriebenen Unterschiede im Wesentlichen die gleiche Funktionsweise wie die Gehäusevorrichtung 18B gemäß Fig. 3 zugrunde liegt.

Die Gehäusevorrichtung 43 ist mit drei Teilen 44, 45 und 46 ausgeführt, wobei ein erster Teil 44 der Gehäusevorrichtung 43 den Flanschbereich 18 und den Rotorbereich 21 umfasst und im Querschnitt ein T-förmiges Profil aufweist. Der erste Teil 44 ist mit einem vergleichbar zu dem Mittelschenkel 31 der Gehäusevorrichtung 18B ausgebildeten Mittelschenkel 47 ausgeführt, an den sich in axialer Richtung des Flugtriebwerks 1 jeweils ein Seitenschenkel 48 bzw. 49 anschließt. Die Seitenschenkel 48 und 49 bilden dabei gemeinsam den Rotorbereich 21 und sind an ihren in axialer Richtung des Flugtriebwerks 1 dem Mittelschenkel 47 abweisenden Endbereichen 50, 51 wiederum in radialer Richtung des Flugtriebwerks 1 nach innen gebogen. Die Teile 44, 45 und 46 weisen wiederum eine jeweils konstante Wandstärke auf und sind bezüglich des Flanschbereichs 19 symmetrisch angeordnet.

Bei der Herstellung des ersten Teils 44 aus einem Blechteil durch Umformverfahren entsteht in einem Übergangsbereich zwischen dem Mittelschenkel 47 und den Seitenschenkeln 48, 49 eine Kerbe 52. Um dennoch eine im Querschnitt im Wesentlichen plane Fläche 53 zur Anordnung der abrasiven Schicht 22 zu erzeugen, kann in der Kerbe 52 bei der Herstellung des ersten Teils 44 ein Lötdraht eingebracht werden und die Fläche 53 anschließend gegebenenfalls nachbearbeitet werden.

Der zweite Teil 45 und der dritte Teil 46 der Gehäusevorrichtung 43 weisen im Querschnitt ein C-förmiges Profil auf, wobei eine Öffnung des zweiten Teils 45 und des dritten Teils 46 jeweils in axialer Richtung des Flugtriebwerks 1 in eine von dem Mittelschenkel 47 abgewandte Richtung weist. Mit einer in radialer Richtung des Flugtriebwerks 1 nach innen gewandten Oberfläche 54, 55 sind die Teile 45, 46 in einem dem Endbereich 50 bzw. 51 des Seitenschenkels 48 bzw. 49 zugewandten Bereich stoffschlüssig mit dem ersten Teil 44 verbunden. Die in radialer Richtung des Flugtriebwerks 1 nach außen gewandten Oberflächen 56, 57 der Teile 45, 46 sind in oben näher beschriebener Weise zum Zusammenwirken mit Gehäuseteilen 35 bzw. 36 vorgesehen.

Fig. 5 zeigt eine dritte Ausführungsform einer erfindungsgemäß ausgebildeten Gehäusevorrichtung 60, die wiederum in einer Verdichterstufe 9 der Verdichtervorrichtung 6 des Flugtriebwerks 1 verwendbar ist. Die Funktionsweise der Gehäusevorrichtung 60 entspricht wiederum im Wesentlichen jeweils der Funktionsweise der Gehäusevorrichtungen 18B und 43, weshalb im Folgenden lediglich auf die Unterschiede zu diesen Gehäusevorrichtungen 18B und 43 eingegangen wird und bezüglich der weiteren Funktion auf die Beschreibung zu Fig. 3 und Fig. 4 verwiesen wird.

Die Gehäusevorrichtung 60 ist mit vier Teilen 61, 62, 63, 64 ausgeführt. Jeder Bereich 19, 20A, 20B und 21 wird bei dieser Ausführung von einem separaten Teil 61, 62, 63 bzw. 64 gebildet. Der erste, den Flanschbereich 19 ausbildende Teil 61 ist T-förmig mit einem Mittelschenkel 65 und sich in axialer Richtung des Flugtriebwerks 1 daran anschließenden Seitenschenkel 66, 67 ausgeführt, wobei die Seitenschenkel 66, 67 in axialer Richtung des Flugtriebwerks 1 eine im Vergleich zu den Seitenschenkeln 25, 26 bzw. 48, 49 geringe Erstreckung aufweisen, die derart gewählt ist, dass eine stabile Anbringung an dem den Rotorbereich 21 bildenden zweiten Teil 62 gewährleistet ist.

Der zweite Teil 62 der Gehäusevorrichtung 60 ist im Wesentlichen identisch zu dem zweiten Teil 24 der Gehäusevorrichtung 18B und der dritte Teil 63 und vierte Teil 64 der Gehäusevorrichtung 60 entsprechend dem zweiten Teil 45 und dem dritten Teil 46 der Gehäusevorrichtung 43 ausgebildet. Eine Anbindung des dritten Teils 63 und des vierten Teils 64 der Gehäusevorrichtung 60 an dem zweiten Teil 62 der Gehäusevorrichtung 60 ist analog zu der Anbindung des zweiten Teils 45 und des dritten Teils 46 der Gehäusevorrichtung 43 an den ersten Teil 47 ausgeführt.

Auch bei dieser Ausführung weist jedes der Teile 61, 62, 63, 64 eine konstante Wandstärke auf. Zudem sind die Teile 61, 62, 63, 64 bezüglich des Flanschbereichs 19 symmetrisch ausgeführt.

Sämtliche Teile 23, 24, 44, 45, 46, 61 bis 64 sind vorliegend aus jeweils einem Blechteil, d. h. aus einem einen ebenen Strang darstellenden flachen Walzfertigprodukt mit einer im Wesentlichen konstanten Wandstärke hergestellt. Bei der Herstellung der Teile 23, 24, 44, 45, 46, 61 bis 64 werden jeweils zunächst die Querschnitte der Teile 23, 24, 44, 45, 46, 61 bis 64 in Umformschritten hergestellt, wobei als Umformverfahren, insbesondere endabmessungsnahe Umformverfahren, vorzugsweise ein Rollformverfahren, eingesetzt wird. Den dabei hergestellten Zwischenprodukten wird zur Bildung der Teile 23, 24, 44, 45, 46, 61 bis 64 anschließend wiederum in einem Umformverfahren eine Ringform aufgeprägt, wobei die Endbereiche des Rings jeweils in einem stoffschlüssigen Verfahren, insbesondere mittels Schweißens oder Lötens, miteinander verbunden werden. Bei der Ausführung gemäß Fig. 5 ist schematisch für den Teil 61 gezeigt, dass Endbereiche 68, 69 des Teils 61 nicht miteinander verbunden sind, sondern nach Aufprägung der Ringform ein Spalt 70 zwischen den Endbereichen 68, 69 vorliegt. In hierzu vergleichbarer Weise sind vorliegend auch Endbereiche 71, 72 der Teile 63 und 64 zueinander beabstandet, wobei dies in Fig. 5 nur für den Teil 64 ersichtlich ist. Nach Herstellung der jeweiligen Ringform liegt somit zwischen den Endbereichen 71, 72 der Teile 63 und 64 ein Spalt 73 vor und es wird ein offener Ring gebildet.

Nach der Herstellung der jeweiligen Teile 23, 24, 44, 45, 46, 61 bis 64 einer Gehäusevorrichtung 18B, 43, 60 werden die Teile 23, 24, 44, 45, 46, 61 bis 64 der jeweiligen Gehäusevorrichtung 18B, 43, 60 in der vorbeschriebenen Weise in stoffschlüssigen Verfahren, vorzugsweise mittels Schweißens oder Lötens, miteinander verbunden.

Um die hohen Anforderungen der Abmessungen beispielsweise der Aufnahmebereiche 20A, 20B einzuhalten, kann es vorgesehen sein, dass beispielsweise die Aufnahmebereiche 20A, 20B nachbearbeitet werden.

### Bezugszeichenliste

- 1: Strahltriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9: Verdichterstufe
- 10: Rotorvorrichtung
- 11: Rotorschaufel
- 12: Statorvorrichtung
- 13: Leitschaufel
- 14: inneres Gehäuse
- 15: Zentralachse
- 16: äußeres Gehäuse
- 18A bis 18C: Gehäusevorrichtung
- 19: Flanschbereich
- 20A, 20B: Aufnahmebereich
- 21: Rotorbereich
- 22: abrasive Schicht
- 23: erster Teil
- 24: zweiter Teil
- 25, 26: Seitenschenkel
- 27, 28: Zentralschenkel
- 29, 30: Stufe
- 31: Mittelschenkel
- 32: Zentralbereich
- 33, 34: Endbereich
- 35, 36: Gehäuseteil
- 37: Schraubverbindung
- 38: Bohrung
- 39, 40: Oberfläche
- 41: Umbiegung
- 43: Gehäusevorrichtung
- 44: erster Teil
- 45: zweiter Teil
- 46: dritter Teil
- 47: Mittelschenkel
- 48, 49: Seitenschenkel
- 50, 51: Endbereich
- 52: Kerbe
- 53: Fläche
- 54 bis 57: Oberfläche
- 60: Gehäusevorrichtung
- 61: erster Teil
- 62: zweiter Teil
- 63: dritter Teil
- 64: vierter Teil
- 65: Mittelschenkel
- 66, 67: Seitenschenkel
- 68, 69: Endbereiche
- 70: Spalt
- 71, 72: Endbereiche
- 73: Spalt

## Patentansprüche

1. Gehäusevorrichtung (18, 18A bis 18C; 43; 60) für eine Verdichterstufe (9) einer mehrstufig ausgeführten Verdichtervorrichtung (6) eines Flugtriebwerks (1) mit einem Flanschbereich (19) zur Anbindung an wenigstens eine in axialer Richtung benachbarte Gehäusevorrichtung (18) einer weiteren Verdichterstufe (9), mit einem Rotorbereich (21), der im Einsatz der Gehäusevorrichtung (18, 18A bis 18C; 43; 60) in radialer Richtung der Verdichtervorrichtung (6) direkt mit Rotorschaufeln (11) einer Rotorvorrichtung (10) zusammenwirkt, und mit wenigstens einem Aufnahmebereich (20A, 20B), der zum Aufnehmen von Leitschaufeln (13) einer Statorvorrichtung (12) vorgesehen ist, **dadurch gekennzeichnet, dass** mehrere Teile (23, 24) der Gehäusevorrichtung (18, 18A bis 18C) aus Blechteilen hergestellt sind, wobei ein erster Blechteil (23) der Gehäusevorrichtung (18, 18A bis 18C) den Flanschbereich (19) und ein zweiter Blechteil (24) der Gehäusevorrichtung (18, 18A bis 18C) den Rotorbereich (21) umfasst und der erste Blechteil (23) und der zweite Blechteil (24) gemeinsam den wenigstens einen Aufnahmebereich (20A, 20B) bilden.

2. Gehäusevorrichtung (18, 18A bis 18C; 43; 60) für eine Verdichterstufe (9) einer mehrstufig ausgeführten Verdichtervorrichtung (6) eines Flugtriebwerks (1) mit einem Flanschbereich (19) zur Anbindung an wenigstens eine in axialer Richtung benachbarte Gehäusevorrichtung (18) einer weiteren Verdichterstufe (9), mit einem Rotorbereich (21), der im Einsatz der Gehäusevorrichtung (18, 18A bis 18C; 43; 60) in radialer Richtung der Verdichtervorrichtung (6) direkt mit Rotorschaufeln (11) einer Rotorvorrichtung (10) zusammenwirkt, und mit wenigstens einem Aufnahmebereich (20A, 20B), der zum Aufnehmen von Leitschaufeln (13) einer Statorvorrichtung (12) vorgesehen ist, **dadurch gekennzeichnet, dass** mehrere Teile ( 61, 62, 63, 64) der Gehäusevorrichtung (60) aus Blechteilen hergestellt sind, wobei ein erster Blechteil (61) der Gehäusevorrichtung (60) den Flanschbereich (19), ein zweiter Blechteil (62) der Gehäusevorrichtung (60) den Rotorbereich (21) und wenigstens ein dritter Blechteil (63, 64) der Gehäusevorrichtung (60) den wenigstens einen Aufnahmebereich (20A, 20B) umfasst.

3. Gehäusevorrichtung (18, 18A bis 18C; 43; 60) für eine Verdichterstufe (9) einer mehrstufig ausgeführten Verdichtervorrichtung (6) eines Flugtriebwerks (1) mit einem Flanschbereich (19) zur Anbindung an wenigstens eine in axialer Richtung benachbarte Gehäusevorrichtung (18) einer weiteren Verdichterstufe (9), mit einem Rotorbereich (21), der im Einsatz der Gehäusevorrichtung (18, 18A bis 18C; 43; 60) in radialer Richtung der Verdichtervorrichtung (6) direkt mit Rotorschaufeln (11) einer Rotorvorrichtung (10) zusammenwirkt, und mit wenigstens einem Aufnahmebereich (20A, 20B), der zum Aufnehmen von Leitschaufeln (13) einer Statorvorrichtung (12) vorgesehen ist, **dadurch gekennzeichnet, dass** mehrere Teile ( 44, 45, 46) der Gehäusevorrichtung (43) aus Blechteilen hergestellt sind, wobei ein erster Blechteil (44) der Gehäusevorrichtung (43) den Flanschbereich (19) und den Rotorbereich (21) umfasst und wenigstens ein zweiter Blechteil (45, 46) der Gehäusevorrichtung (43) vorgesehen ist, der den wenigstens einen Aufnahmebereich (20A, 20B) darstellt.

4. Gehäusevorrichtung nach einem der Ansprüche 1 bis 3, **dadurch gekennzeichnet, dass** die mehreren Blechteile (23, 24, 44, 45, 46, 61, 62, 63, 64) der Gehäusevorrichtung (18, 18A bis 18C; 43; 60) mit voneinander abweichenden Wandstärken hergestellt sind.

5. Gehäusevorrichtung nach einem der Ansprüche 1 bis 4, **dadurch gekennzeichnet, dass** wenigstens ein Teil der Gehäusevorrichtung (18, 18A bis 18C; 43; 60) mittels eines Umformverfahrens hergestellt ist.

6. Gehäusevorrichtung nach einem der Ansprüche 1 bis 5, **dadurch gekennzeichnet, dass** der den Flanschbereich (19) bildende Blechteil (23, 44, 61) der Gehäusevorrichtung (18, 18A bis 18C, 43, 60) im Bereich einer Anbindungsstelle für in axialer Richtung des Flugtriebwerks (1) benachbarte Gehäusevorrichtungen (18) eine Umbiegung (41) aufweist.

7. Gehäusevorrichtung nach einem der Ansprüche 1 bis 6, **dadurch gekennzeichnet, dass** die Blechteile (23, 24, 44, 45, 46, 61, 62, 63, 64) der Gehäusevorrichtung (18, 18A bis 18C, 43, 60) stoffschlüssig miteinander verbunden sind.

8. Gehäusevorrichtung nach einem der Ansprüche 1 bis 7, **dadurch gekennzeichnet, dass** der den Rotorbereich (21) umfassende Blechteil (24, 44, 62) der Gehäusevorrichtung (18, 18A bis 18C, 43, 60) auf einer im Einsatz der Gehäusevorrichtung (18, 18A bis 18C, 43, 60) Rotorschaufeln (11) einer Rotorvorrichtung (10) zugewandten Seite mit einer abrasiven Schicht (22) ausgeführt ist.

9. Verfahren zur Herstellung einer Gehäusevorrichtung (18, 18A bis 18C; 43; 60) nach einem der Ansprüche 1 bis 8, **dadurch gekennzeichnet, dass** wenigstens ein Blechteil (23, 24, 44, 45, 46, 61, 62, 63, 64) der Gehäusevorrichtung (18, 18A bis 18C; 43; 60) mittels eines Umformverfahrens hergestellt wird.

10. Verfahren nach Anspruch 9 **dadurch gekennzeichnet, dass** der wenigstens eine Blechteil (23, 24, 44, 45, 46, 61, 62, 63, 64) der Gehäusevorrichtung (18, 18A bis 18C; 43; 60) mittels eines endabmessungsnahen Umformverfahrens hergestellt wird.

11. Verfahren nach einem der Ansprüche 9 oder 10, **dadurch gekennzeichnet, dass** bei der Herstellung eines Blechteils (23, 24, 44, 45, 46, 61, 62, 63, 64) der Gehäusevorrichtung (18, 18A bis 18C; 43; 60) aus einem ebenen Grundkörper zunächst der Querschnitt des Blechteils (23, 24, 44, 45, 46, 61, 62, 63, 64) hergestellt wird und anschließend das entstandene Zwischenprodukt in eine Ringform überführt wird, wobei Endbereiche des Zwischenprodukts miteinander verbunden werden oder zueinander beabstandet sind, so dass ein Spalt zwischen den Endbereichen vorliegt.

12. Verfahren nach einem der Ansprüche 9 bis 11, **dadurch gekennzeichnet, dass** zunächst die einzelnen Blechteile (23, 24, 44, 45, 46, 61, 62, 63, 64) der Gehäusevorrichtung (18, 18A bis 18C; 43; 60) hergestellt werden und diese anschließend insbesondere stoffschlüssig miteinander verbunden werden.

13. Verfahren nach einem der Ansprüche 9 bis 12, **dadurch gekennzeichnet, dass** wenigstens ein Bereich eines Blechteils (23, 24, 44, 45, 46, 61, 62, 63, 64) der Gehäusevorrichtung (18, 18A bis 18C; 43; 60) nachbearbeitet wird.

## Claims

1. Housing device (18, 18A to 18C; 43; 60) for a compressor stage (9) of a multi-stage compressor device (6) of an aircraft gas turbine (1) having a flange region (19) for connecting to at least one axially adjacent housing device (18) of another compressor stage (9), having a rotor region (21) which, when the housing device (18, 18A to 18C; 43; 60) is in use, directly cooperates in the radial direction of the compressor device (6) with rotor blades (11) of a rotor device (10), and having at least one receiving region (20A, 20B) which is intended for receiving guide vanes (13) of a stator device (12), **characterized in that** multiple parts (23, 24) of the housing device (18, 18A to 18C) are made from sheet metal parts, wherein a first sheet metal part (23) of the housing device (18, 18A to 18C) comprises the flange region (19) and a second sheet metal part (24) of the housing device (18, 18A to 18C) comprises the rotor region (21), and the first sheet metal part (23) and the second sheet metal part (24) together form the at least one receiving region (20A, 20B).

2. Housing device (18, 18A to 18C; 43; 60) for a compressor stage (9) of a multi-stage compressor device (6) of an aircraft gas turbine (1) having a flange region (19) for connecting to at least one axially adjacent housing device (18) of another compressor stage (9), having a rotor region (21) which, when the housing device (18, 18A to 18C; 43; 60) is in use, directly cooperates in the radial direction of the compressor device (6) with rotor blades (11) of a rotor device (10), and having at least one receiving region (20A, 20B) which is intended for receiving guide vanes (13) of a stator device (12), **characterized in that** multiple parts (61, 62, 63, 64) of the housing device (60) are made from sheet metal parts, wherein a first sheet metal part (61) of the housing device (60) comprises the flange region (19), a second sheet metal part (62) of the housing device (60) comprises the rotor region (21), and at least one third sheet metal part (63, 64) of the housing device (60) comprises the at least one receiving region (20A, 20B).

3. Housing device (18, 18A to 18C; 43; 60) for a compressor stage (9) of a multi-stage compressor device (6) of an aircraft gas turbine (1) having a flange region (19) for connecting to at least one axially adjacent housing device (18) of another compressor stage (9), having a rotor region (21) which, when the housing device (18, 18A to 18C; 43; 60) is in use, directly cooperates in the radial direction of the compressor device (6) with rotor blades (11) of a rotor device (10), and having at least one receiving region (20A, 20B) which is intended for receiving guide vanes (13) of a stator device (12), **characterized in that** multiple parts (44, 45, 46) of the housing device (43) are made from sheet metal parts, wherein a first sheet metal part (44) of the housing device (43) comprises the flange region (19) and the rotor region (21), and there is provided at least one second sheet metal part (45, 46) of the housing device (43), which represents the at least one receiving region (20A, 20B).

4. Housing device according to one of Claims 1 to 3, **characterized in that** the multiple sheet metal parts (23, 24, 44, 45, 46, 61, 62, 63, 64) of the housing device (18, 18A to 18C; 43; 60) are produced with wall thicknesses that differ from one another.

5. Housing device according to one of Claims 1 to 4, **characterized in that** at least one part of the housing device (18, 18A to 18C; 43; 60) is produced using a shaping process.

6. Housing device according to one of Claims 1 to 5, **characterized in that** that sheet metal part (23, 44, 61) of the housing device (18, 18A to 18C; 43; 60) that forms the flange region (19) has a bend (41) in the region of a connection point for housing devices (18) that are adjacent in the axial direction of the aircraft gas turbine (1).

7. Housing device according to one of Claims 1 to 6, **characterized in that** the sheet metal parts (23, 24, 44, 45, 46, 61, 62, 63, 64) of the housing device (18, 18A to 18C; 43; 60) are connected to one another in a material-bonded manner.

8. Housing device according to one of Claims 1 to 7, **characterized in that** that sheet metal part (24, 44, 62) of the housing device (18, 18A to 18C; 43; 60) that comprises the rotor region (21) is embodied with an abrasive layer (22) on a side which, when the housing device (18, 18A to 18C; 43; 60) is in use, is oriented towards rotor blades (11) of a rotor device (10).

9. Method for producing a housing device (18, 18A to 18C; 43; 60) according to one of Claims 1 to 8, **characterized in that** at least one sheet metal part (23, 24, 44, 45, 46, 61, 62, 63, 64) of the housing device (18, 18A to 18C; 43; 60) is produced using a shaping process.

10. Method according to Claim 9, **characterized in that** the at least one sheet metal part (23, 24, 44, 45, 46, 61, 62, 63, 64) of the housing device (18, 18A to 18C; 43; 60) is produced using a near-net-dimension shaping process.

11. Method according to either of Claims 9 and 10, **characterized in that**, during production of a sheet metal part (23, 24, 44, 45, 46, 61, 62, 63, 64) of the housing device (18, 18A to 18C; 43; 60), first the cross section of the sheet metal part (23, 24, 44, 45, 46, 61, 62, 63, 64) is produced from a planar basic body and then the resulting intermediate product is transferred to an annular form wherein end regions of the intermediate product are connected to one another or are spaced apart from one another so that a gap exists between the end regions.

12. Method according to one of Claims 9 to 11, **characterized in that** first the individual sheet metal parts (23, 24, 44, 45, 46, 61, 62, 63, 64) of the housing device (18, 18A to 18C; 43; 60) are produced, and these are subsequently connected to one another, in particular in a material-bonded manner.

13. Method according to one of Claims 9 to 12, **characterized in that** at least one region of a sheet metal part (23, 24, 44, 45, 46, 61, 62, 63, 64) of the housing device (18, 18A to 18C; 43; 60) undergoes finishing.

## Revendications

1. Dispositif de boîtier (18, 18A à 18C; 43; 60) pour un étage de compresseur (9) d'un dispositif de compresseur à plusieurs étages (6) d'un moteur d'avion (1) avec une région de bride (19) pour la liaison à au moins un dispositif de boîtier voisin en direction axiale (18) d'un autre étage de compresseur (9), avec une région de rotor (21), qui dans l'insertion du dispositif de boîtier (18, 18A à 18C; 43; 60) coopère directement en direction radiale du dispositif de compresseur (6) avec des aubes de rotor (11) d'un dispositif de rotor (10), et avec au moins une région de logement (20A, 20B), qui est prévue pour contenir des aubes directrice (13) d'un dispositif de stator (12), **caractérisé en ce que** plusieurs parties (23, 24) du dispositif de boîtier (18, 18A à 18C) sont fabriquées à partir de pièces de tôle, dans lequel une première pièce de tôle (23) du dispositif de boîtier (18, 18A à 18C) comprend la région de bride (19) et une deuxième pièce de tôle (24) du dispositif de boîtier (18, 18A à 18C) comprend la région de rotor (21), et la première pièce de tôle (23) et la deuxième pièce de tôle (24) forment ensemble ladite au moins une région de logement (20A, 20B).

2. Dispositif de boîtier (18, 18A à 18C; 43; 60) pour un étage de compresseur (9) d'un dispositif de compresseur à plusieurs étages (6) d'un moteur d'avion (1) avec une région de bride (19) pour la liaison à au moins un dispositif de boîtier voisin en direction axiale (18) d'un autre étage de compresseur (9), avec une région de rotor (21), qui dans l'insertion du dispositif de boîtier (18, 18A à 18C; 43; 60) coopère directement en direction radiale du dispositif de compresseur (6) avec des aubes de rotor (11) d'un dispositif de rotor (10), et avec au moins une région de logement (20A, 20B), qui est prévue pour contenir des aubes directrice (13) d'un dispositif de stator (12), **caractérisé en ce que** plusieurs parties (61, 62, 63, 64) du dispositif de boîtier (60) sont fabriquées à partir de pièces de tôle, dans lequel une première pièce de tôle (61) du dispositif de boîtier (60) comprend la région de bride (19), une deuxième pièce de tôle (62) du dispositif de boîtier (60) comprend la région de rotor (21) et au moins une troisième pièce de tôle (63, 64) du dispositif de boîtier (60) comprend ladite au moins une région de logement (20A, 20B).

3. Dispositif de boîtier (18, 18A à 18C; 43; 60) pour un étage de compresseur (9) d'un dispositif de compresseur à plusieurs étages (6) d'un moteur d'avion (1) avec une région de bride (19) pour la liaison à au moins un dispositif de boîtier voisin en direction axiale (18) d'un autre étage de compresseur (9), avec une région de rotor (21), qui dans l'insertion du dispositif de boîtier (18, 18A à 18C; 43; 60) coopère directement en direction radiale du dispositif de compresseur (6) avec des aubes de rotor (11) d'un dispositif de rotor (10), et avec au moins une région de logement (20A, 20B), qui est prévue pour contenir des aubes directrice (13) d'un dispositif de stator (12), **caractérisé en ce que** plusieurs parties (44, 45, 46) du dispositif de boîtier (43) sont fabriquées à partir de pièces de tôle, dans lequel une première pièce de tôle (44) du dispositif de boîtier (43) comprend la région de bride (19) et la région de rotor (21), et il est prévu au moins une deuxième pièce de tôle (45, 46) du dispositif de boîtier (43), qui représente ladite au moins une région de logement (20A, 20B).

4. Dispositif de boîtier selon l'une quelconque des revendications 1 à 3, **caractérisé en ce que** les multiples pièces de tôle (23, 24, 44, 45, 46, 61, 62, 63, 64) du dispositif de boîtier (18, 18A à 18C; 43; 60) sont fabriquées avec des épaisseurs de paroi différentes les unes des autres.

5. Dispositif de boîtier selon l'une quelconque des revendications 1 à 4, **caractérisé en ce qu'**au moins une partie du dispositif de boîtier (18, 18A à 18C; 43; 60) est fabriquée par un procédé de formage.

6. Dispositif de boîtier selon l'une quelconque des revendications 1 à 5, **caractérisé en ce que** la pièce de tôle (23, 44, 61) du dispositif de boîtier (18, 18A à 18C, 43, 60) formant la région de bride (19) présente dans la région d'une zone de liaison pour des dispositifs de boîtier (18) voisins dans la direction axiale du moteur d'avion (1) une partie repliée (41).

7. Dispositif de boîtier selon l'une quelconque des revendications 1 à 6, **caractérisé en ce que** les pièces de tôle (23, 24, 44, 45, 46, 61, 62, 63, 64) du dispositif de boîtier (18, 18A à 18C, 43, 60) sont assemblées les unes aux autres par des liaisons matérielles.

8. Dispositif de boîtier selon l'une quelconque des revendications 1 à 7, **caractérisé en ce que** la pièce de tôle (24, 44, 62) du dispositif de boîtier (18, 18A à 18C, 43, 60) comprenant la région de rotor (21) est réalisée avec un revêtement abrasif (22) sur un côté tourné vers des aubes de rotor (11) d'un dispositif de rotor (10) dans l'insertion du dispositif de boîtier (18, 18A à 18C, 43, 60).

9. Procédé de fabrication d'un dispositif de boîtier (18, 18A à 18C; 43; 60) selon l'une quelconque des revendications 1 à 8, **caractérisé en ce qu'**au moins une pièce de tôle (23, 24, 44, 45, 46, 61, 62, 63, 64) du dispositif de boîtier (18, 18A à 18C; 43; 60) est fabriquée au moyen d'un procédé de formage.

10. Procédé selon la revendication 9, **caractérisé en ce que** ladite au moins une pièce de tôle (23, 24, 44, 45, 46, 61, 62, 63, 64) du dispositif de boîtier (18, 18A à 18C; 43; 60) est fabriquée au moyen d'un procédé de formage approximativement aux dimensions finales.

11. Procédé selon une des revendications 9 ou 10, **caractérisé en ce que**, lors de la fabrication d'une pièce de tôle (23, 24, 44, 45, 46, 61, 62, 63, 64) du dispositif de boîtier (18, 18A à 18C; 43; 60) à partir d'un corps de base plan, on fabrique d'abord la section transversale de la pièce de tôle (23, 24, 44, 45, 46, 61, 62, 63, 64) et on donne ensuite au produit intermédiaire obtenu une forme annulaire, dans lequel on assemble l'une à l'autre des régions d'extrémité du produit intermédiaire ou on les maintient à distance l'une de l'autre, de telle manière qu'il existe une fente entre les régions d'extrémité.

12. Procédé selon l'une quelconque des revendications 9 à 11, **caractérisé en ce que** l'on fabrique d'abord les pièces de tôle individuelles (23, 24, 44, 45, 46, 61, 62, 63, 64) du dispositif de boîtier (18, 18A à 18C; 43; 60) et on les assemble ensuite les unes aux autres en particulier par une liaison matérielle.

13. Procédé selon l'une quelconque des revendications 9 à 12, **caractérisé en ce que** l'on retouche au moins une région d'une pièce de tôle (23, 24, 44, 45, 46, 61, 62, 63, 64) du dispositif de boîtier (18, 18A à 18C; 43; 60).
